# EUROPEAN PATENT APPLICATION

(11) **EP 0 601 651 A1**
(43) Date of publication of application: **15.06.1994**
(21) Application number: 93203397.0
(22) Date of filing: 03.12.1993
(51) Int. Cl.: G06K 11/08

(54) **Optical touch tablet based on sector cross bearing**

(30) Priority: 10.12.1992 EP 92203859
(71) Applicant: Philips Electronics N.V., 5621 BA Eindhoven (NL)
(72) Inventor: Makinawa, Kofi Afolabi Anthony, NL-5656 AA Eindhoven (NL); Duwaer, Arne Lex, NL-5656 AA Eindhoven (NL); Baller, Theunis Siemen, NL-5656 AA Eindhoven (NL)
(74) Representative: Strijland, Wilfred

(57) **Abstract**

A data input device includes a touch tablet provided with locating means to determine a location of an object relative to the touch tablet through detection of the object obstructing light beams between a plurality of light beam transmitters and a plurality of light beam receivers. Each transmitter is capable of simultaneous transmission of light beams to a plurality of consecutive receivers. The locating means determines the location on the basis of positions of at least first and second non-overlapping shadow zones that are cast onto first and second pluralities of consecutive ones of the receivers as a result of the object obstructing the light beams from first and second ones of the transmitters, respectively.

## Description

### FIELD OF THE INVENTION

The invention relates to a data input device with a touch tablet, wherein the touch tablet is provided with locating means to determine a location of an object relative to the touch tablet. Locating is achieved through detection of the object obstructing light beams between a plurality of light beam transmitters and a plurality of light beam receivers.

### BACKGROUND ART

Data input devices, whose operation is based on detection of obstruction of light beams are known colloquially as optical touch tablets. Touch tablets are used to enter information into information processing systems. Particular information items correspond to particular areas on the tablet. The operation of conventional optical touch tablets is based on locating the obstruction, e.g. caused by the user's finger, of one or more light beams organised in a grid-like pattern of light beams. Each light beam functionally couples one emitter to a single detector. See for instance, the section "Background Of The Invention" of European Patent Specification EP 0 202 468.

In a conventional touch tablet, an array of transmitters is arranged typically along two adjacent sides of the tablet, and an array of receivers is arranged along the two adjacent opposite sides of the tablet. The transmitters and receivers operate sequentially and in pairs. If the beam from an emitter reaches the associated receiver, the latter will respond by producing a confirmation output signal confirming the reception. If the beam is blocked by the object, the receiver will not respond. The coordinates of the object's position then are derived from the ranks of the pairs whose receivers do not produce the confirmation output signal. The transmitters and receivers are governed by control means that supervises the turning on and off of the transmitters, processes the output signals supplied by the receivers and calculates the object's position. To this end, all transmitters and receivers are hard-wired connected to the control means.

The prior art device uses a grid-like pattern of beams substantially covering the touch tablet. This architecture requires both horizontal and vertical arrangements of transmitters and of receivers. Typically, a number of 160 receivers and transmitters is employed, arranged along the perimeter of the touch tablet to obtain an adequate accuracy in the position of an object of 2,5 mm on a 100 x 100 mm² tablet.

### OBJECT OF THE INVENTION

It is an object of the invention to provide an optical touch tablet with a number of components and interconnections that is considerably smaller than in the prior art. It is a further object to provide an optical touch tablet that has a reduced number of interconnections between the control means and the receiver and transmitter arrangements. It is another object to furnish an optical touch tablet that consumes considerably less power than the prior art devices.

### SUMMARY OF THE INVENTION

To this end, the invention provides a data input device as specified in the preamble, characterized by following features. Each respective one of the transmitters is capable of simultaneous transmission of light beams to a respective plurality of consecutive ones of the receivers. The locating means is operative to determine the location of the object on the basis of positions of at least first and second non-overlapping shadow zones that are cast onto first and second pluralities of consecutive ones of the receivers as a result of the object obstructing the light beams from first and second ones of the transmitters, respectively.

The invention is based on the insight that position detection can be performed by cross bearing using a transmitter broadcasting to more than one receiver. If a transmitter is activated, the presence of an optically opaque object near the tablet e.g., a finger or a stylus, results in a shadow zone cast onto a plurality of the receivers. The position of the active transmitter and the positions of the receivers located in the shadow zone determine a first segment of potential positions of the object within the tablet's area. The segment typically is shaped as a polygon. If another transmitter is active, another shadow zone is cast onto the receivers. The position of this other transmitter together with the locations of the receivers that now are located in this other shadow zone determine a second segment of potential positions of the object within the tablet's area. The object's actual position then coincides with a location inside the overlap of the first and second segments, e.g., at the intersection of the bisectors of the apexes, each respective apex coinciding with the location of the respective one of the transmitters.

More than two segments may be used in order to more accurately determine the centre of the cross section. That is, a plurality of transmitters may be involved to produce a corresponding plurality of shadow zones. Depending on the actual design of the touch tablet the positions of the respective receivers involved in the respective shadow zones are processed to determine the coordinates representative of the object's position. The actual shapes of the arrangements of the transmitters and of the receivers determine the required processing power of the locating means. Tests, conducted to find the optimum geometric distribution of the transmitters and the receivers, demonstrate that arrangements of concave curves facing one another, for example C-shaped or shaped as square brackets: [ ], perform well, and that a combined total of 30 receivers and transmitters suffice to obtain an accuracy of 2.5 mm in the position of an object of 5 mm on a 100 x 100 mm² touch tablet. This is a reduction by a factor of five of the number of active components required in the conventional touch tablet to reach at least the same accuracy level.

Note that in prior art optical touch tablets the pairwise operation of the transmitters and the receivers inherently leads to an upper bound of the resolution, typically in the order of the distance between neighbouring transmitters. In the invention, however, the resolution is not essentially determined by distances between consecutive transmitters, but more by the algorithm used to process the data pertaining to correlating the shadow zones. Consequently, the touch tablet in the invention provides an essentially higher operational accuracy.

Thus, an input device in the invention is essentially more accurate, uses a smaller number of components and of interconnections than the known device, costs less owing to fewer components that are less critical regarding light beam alignment, is easier to assemble as the physical position of the transmitters and receivers is subsidiary to the design of the touch tablet.

For the sake of completeness it is noted that International Publication WO 92/07336 discloses an optical touch tablet, wherein a plurality of transmitters arranged along a side of a reference plane and wherein a first receiver and a second receiver are present at a first end and a second end, respectively, of the opposite side of the plane. Each of the transmitters communicates with both receivers in the absence of an obstructing object along a line forming the signal path. An object is located by determining the position of the crossing of the obstructed light paths, i.e., two lines of possible locations of the obstructing object.

This prior art embodiment does not operate on the basis of each respective one of the transmitters being capable of simultaneous transmission of light beams to a respective plurality of consecutive ones of the receivers, since all transmitters communicate to the same pair of receivers. Also, this prior art embodiment does not operate on the basis of the locating means determining the location of an object on the basis of positions of at least first and second non-overlapping shadow zones that are cast onto first and second pluralities of consecutive ones of the receivers as a result of the presence of an object obstructing the light beams from first and second ones of the transmitters, respectively. In this prior art, having both receivers blocked renders the touch tablet inoperative, whereas in the invention the blocking of consecutive ones of the receivers is essential to the operation.

In addition the device disclosed in WO 92/07336 requires the transmitters to transmit non-uniformly to both remotely located corners and/or an adequate directional accuracy in order not to waste power by illuminating the region between the two receivers. Both receivers should be actuated uniformly by light received from a plurality of directions, preferably by having a uniform directional sensitivity, in order to avoid measures for compensating for each of the directions individually. Such an embodiment therefore requires components and calibration methods considerably more expensive than the input device of the invention.

### BRIEF DESCRIPTION OF THE DRAWING

The invention is explained below by way of example and with reference to the accompanying drawing, wherein:
Fig. 1 illustrates a first example of an input device according to the invention; and
Fig. 2 gives a second example of an input device in the invention.

### DETAILED DESCRIPTION OF THE EMBODIMENTS

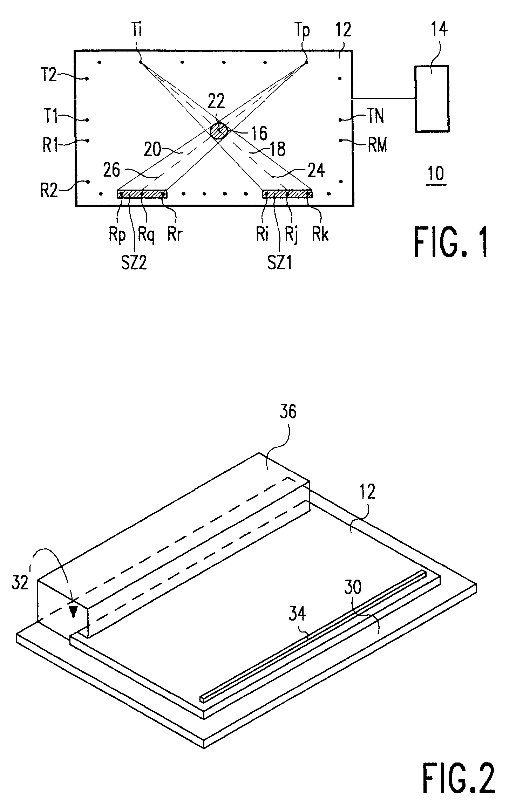

Fig. 1 gives a diagram of a first example of the device 10 in the invention. Device 10 comprises a touch tablet 12 whose perimeter comprises a first array of transmitters T1, ..., TN and a second array of receivers R1, ..., RM arranged substantially opposite the first array. The number N of transmitters is equal to or larger than two, and the number M of receivers is preferably larger than two. Transmitters T1-TN and receivers R1-RM are coupled to locating means 14. Locating means 14 sequentially enables one of transmitters T1-TN at a time and monitors the response of receivers R1-RM to calculate an object's position.

An optically opaque object 16 is located near tablet 12. If transmitter Ti is enabled, a first shadow zone SZ1 is formed on the receiver array as object 16 blocks the light beams in the direction from Ti to receivers Ri, Rj and Rk. Shadow zone SZ1 and transmitter Ti determine a first segment 18 of tablet 12 of possible positions of object 16. If Tp is enabled, a second shadow zone SZ2 is formed as the path from Tp to receivers Rp, Rq and Rr is blocked. Shadow zone SZ2 and transmitter Tp determine a second segment 20 of possible positions of object 16. The intersection of segment 18 and segment 20 narrows down the set of possible positions of object 16. Further shadow zones may be created in a similar way to reduce the set even further.

Locating means 14 calculates the position of object 16 as follows. A first virtual straight line 24 is determined for segment 18, e.g., the bisector of the apex of segment 18 at Ti, or the line which connects transmitter Ti to a point in the middle of a virtual line segment along receivers Ri, Rj and Rk, or the line that divides segment 18 in two substantially equal parts. A similar second virtual straight line 26 is determined for segment 20, e.g., the bisector of the apex of segment 20 at Tp, or the line which connects transmitter Tp to a point in the middle of a virtual line segment 30 along receivers Rp, Rq and Rr, or the line that divides segment 20 in two substantially equal parts. An intersection of lines 24 and 26 then represents the position of object 16.

Note that for the calculation of the position it is necessary to have limiting boundaries of the segments. That is, a shadow zone (SZ1, SZ2) should be flanked by light zones. Therefore, the transmitters and the receivers are preferably arranged in C-shaped curves to form such well defined segments and shadow zones for avoiding non-operative touch tablet areas.

The order of enabling the transmitters is an option left to the designer. For instance, T1 may be enabled first, then T2, thereupon T3, etc, that is according to the rank in the ordered array. Alternatively, T1 may be enabled first, then TN, thereupon T2, then T(N-1), etc., that is, working from the outside to the inside. Also, transmitters T1-TN may be turned on and off according to a time pattern depending on whether or not the object's position is determined with a desired accuracy. If, for instance, T1 and TN suffice to determine the object's position within a desired error range, the other transmitters T2, ..., T(N-1) need not to be activated in the same operation cycle.

Within the scope of the invention, the term "transmitters" may indicate, for instance, discrete infra-red transmitting elements and the term "receivers" may indicate, for instance, discrete elements sensitive to infra-red. Alternatively, the term "transmitters" may be understood as being physically implemented by a single element, whose light emitting properties can be spatially varied in a controllable way. To illustrate this architecture, Fig. 2 schematically shows touch tablet 12 combined with an LCD 30. LCD 30 is of a type using back lighting, i.e., a light source (not shown) illuminates the crystals of LCD from the back so that light is selectively transmitted or blocked by the crystals. An elongated portion 32 of an LCD 30 functionally behaves as an array of spatially distributed transmitters by controlling the transparency of the LCD's crystals, a particular "transmitter" then being functionally identical to a particular pattern of light blocking and light transmitting crystals. Receivers 34 then should be of a type sensitive to the light thus transmitted, possibly via optical transmission means 36, e.g., lenses and/or mirrors) to direct the light transmitted by elongated portion 32 to receivers 34. Alternatively, portion 36 may contain lighting means to play a double role as the source for the transmitters, e.g., implemented by controllable shutters in portion 36, and as the source for back plane illumination of the LCD 30 via a transparent portion 32 and some reflectors (not shown). These examples could be attractive embodiments if the touch tablet itself is already integrated with an LCD, as it reduces cost and power consumption. It will be clear to the skilled person that what is important to implement the invention is the capability of each of two or more transmitters to transmit a light beam to more than one receiver in the absence of the object.
Note that the invention can conceivably be applied to prior art optical touch tablet in order to increase their accuracy. Typically, the LEDs used as transmitters in known optical touch tablets do not have a unidirectional or collimated transmission profile. Accordingly, these LEDs (all or a subset) could be used under appropriate control to implement a touch tablet as proposed in the invention, simply by way of replacing the LEDs' and the receivers' conventional control by the locating means in the invention. The locating means then is composed of a module containing a controller for the transmitters and the receivers, and a processor to execute the data operations to execute the necessary calculations.

## Claims

1. A data input device with a touch tablet, wherein:
- the touch tablet is provided with locating means operative to determine a location of an object relative to the touch tablet through detection of the object obstructing light beams between a plurality of light beam transmitters and a plurality of light beam receivers; characterized in that
- each respective one of the transmitters is capable of simultaneous transmission of light beams to a respective plurality of consecutive ones of the receivers;
- the locating means is operative to determine the location on the basis of positions of at least first and second non-overlapping shadow zones that are cast onto first and second pluralities of consecutive ones of the receivers as a result of the object obstructing the light beams from first and second ones of the transmitters, respectively.

2. The device of claim 1, wherein the locating means is operative to sequentially activate the transmitters.

3. The device of claim 1, wherein the plurality of transmitters are arranged along a concave curve facing the receivers.

4. The device of claim 1 or 3, wherein the receivers are arranged along a concave curve facing the transmitters.

5. The device of claim 1 comprising an LCD, wherein a light source for the transmitters is physically integrated with a light source for the functional illumination of the LCD.
